# FASCICULE DE BREVET EUROPEEN

(11) **EP 3 093 553 B1**
(45) Date de publication et mention de la délivrance du brevet: **18.04.2018**
(21) Numéro de dépôt: 16166622.7
(22) Date de dépôt: 22.04.2016
(51) Int. Cl.: F21S 8/10, F21V 31/03

(54) **BLOC OPTIQUE DE VÉHICULE À BOÎTIER À PROTUBÉRANCE ENTOURANT UNE DOUILLE DE LAMPE ET À OUVERTURE D'ÉVACUATION D'EAU**
OPTISCHER BLOCK FÜR FAHRZEUG MIT HERAUSRAGENDEM GEHÄUSE, DAS EINE LAMPENFASSUNG UMGIBT UND EINE WASSERABLAUFÖFFNUNG UMFASST
VEHICLE HEADLAMP WITH PROTRUDING HOUSING SURROUNDING A LAMP SOCKET, HAVING A WATER DISCHARGE OPENING

(30) Priorité: 11.05.2015 FR 1554194
(43) Date de publication de la demande: 16.11.2016
(73) Titulaire: PSA Automobiles SA, 78300 Poissy (FR)
(72) Inventeur: PERON, RODOLPHE, 95220 HERBLAY (FR)

(56) Documents cités:
- DE-A1- 2 416 162
- FR-A1- 2 440 288
- FR-A1- 2 600 145
- FR-A1- 2 793 003
- US-A1- 2015 003 096

## Description

L'invention concerne les blocs optiques de véhicule qui comprennent au moins une lampe à douille.

On entend ici par « lampe » un dispositif produisant des photons et participant dans un bloc optique de véhicule à au moins une fonction d'éclairage ou de signalisation, et/ou un effet lumineux décoratif.

Certains blocs optiques de véhicule, éventuellement de type automobile, comprennent un boîtier comportant une paroi arrière munie d'un trou permettant le passage d'une partie avant d'une lampe, éventuellement de type quart de tour. La douille étant située à l'extérieur du boîtier, elle se retrouve, tout comme le faisceau électrique qui l'alimente, exposée à l'eau (de pluie, de lavage ou de projection). Afin d'éviter que cette eau ne pénètre dans le boîtier par le trou, on équipe ce dernier d'un joint d'étanchéité. Mais, malgré ce joint d'étanchéité, une partie de l'eau coule directement sur la douille et parvient à pénétrer dans le boîtier.

Pour tenter d'améliorer la situation, il a été proposé de définir sur la face arrière de la paroi arrière du boîtier un muret circulaire fermé entourant le trou (de douille) et destiné à éviter les écoulements directs d'eau sur la douille.

Hélas, comme le sait l'homme de l'art, ce muret fermé induit une rétention d'eau sur sa face interne, ce qui peut provoquer des odeurs désagréables et/ou permettre une entrée d'eau dans le boîtier. FR 2.600.145 divulgue un bloc optique destiné à équiper un véhicule. L'invention a donc notamment pour but d'améliorer la situation.

Elle propose notamment à cet effet un bloc optique destiné à équiper un véhicule et comprenant un boîtier comportant une paroi arrière munie d'un trou, propre à permettre le passage d'une douille d'une lampe, et, sur une face arrière, d'une protubérance entourant ce trou en définissant pour une douille de cette lampe un muret de protection contre de l'eau.

Ce bloc optique se caractérise par le fait que la protubérance de son boîtier comprend, dans une partie inférieure, au moins une ouverture propre à permettre une évacuation automatique d'eau présente sur une face interne.

Grâce à cette (chaque) ouverture, l'eau ne peut plus stagner sur la face interne de la protubérance et donc ne risque plus de provoquer des odeurs désagréables et/ou d'entrer dans le boîtier.

Le bloc optique selon l'invention peut comporter d'autres caractéristiques qui peuvent être prises séparément ou en combinaison, et notamment :
- la protubérance peut être une paroi sensiblement perpendiculaire à la face arrière de la paroi du boîtier et comportant une première sous-partie entourant le trou (de douille) sur un secteur angulaire qui est strictement inférieur à 360° afin de définir l'ouverture, et prolongée par une seconde sous-partie conformée de manière à guider l'eau jusque dans une zone d'évacuation située sous la partie inférieure ;
   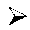 la seconde sous-partie peut être au moins en partie rectiligne ;
   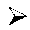 la seconde sous-partie peut comprendre une extrémité inférieure curviligne ;
   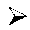 la face arrière de la partie arrière du boîtier peut également comprendre, dans la zone d'évacuation, une paroi déflectrice propre à transférer l'eau jusque dans au moins une autre zone d'évacuation ;
      - la paroi déflectrice peut présenter une forme générale d'accent circonflexe de manière à transférer l'eau jusque dans deux autres zones d'évacuation ;
      - en variante, la paroi déflectrice peut présenter une forme générale de virgule inclinée.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement, dans une vue en perspective du côté arrière, un exemple de réalisation d'un bloc optique selon l'invention,
- la figure 2 illustre schématiquement, dans une vue en perspective du côté arrière, une partie de la paroi arrière du bloc optique de la figure 1,
- la figure 3 illustre schématiquement, dans une vue de face du côté arrière, une première variante du bloc optique des figures 1 et 2, et
- la figure 4 illustre schématiquement, dans une vue de face du côté arrière, une seconde variante du bloc optique des figures 1 et 2.

L'invention a notamment pour but de proposer un bloc optique BO destiné à équiper un véhicule et comprenant au moins une lampe à douille LE.

Dans ce qui suit, on considère, à titre d'exemple non limitatif, que le bloc optique BO est destiné à équiper un véhicule de type automobile. Mais l'invention n'est pas limitée à ce type de véhicule. Elle concerne en effet tout type de véhicule comportant au moins un bloc optique à lampe(s) à douille.

On notera que le bloc optique BO peut être aussi bien un phare (ou projecteur avant), qu'un feu arrière.

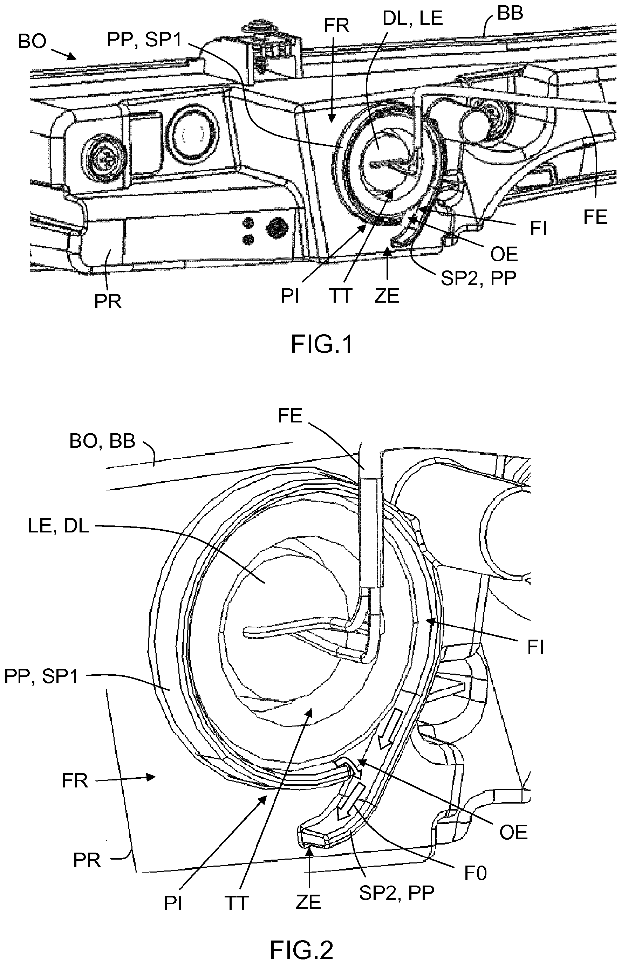

On a schématiquement illustré sur la figure 1 un exemple de réalisation d'un boîtier BB d'un bloc optique BO selon l'invention. On notera que ce boîtier BB est destiné à être couplé fixement (par exemple par vissage ou collage) à une glace (non représentée) qui peut être réalisée en matière plastique (ou synthétique) transparente ou bien en verre. Cette glace et ce boîtier BB délimitent un espace interne logeant au moins partiellement au moins un dispositif d'éclairage comprenant une lampe LE à douille DL et participant à au moins une fonction d'éclairage ou de signalisation, et/ou un effet lumineux décoratif.

La douille DL est par exemple agencée de manière à être couplée au boîtier BB par une rotation d'environ un quart de tour. Mais dans une variante elle pourrait être agencée de manière à être couplée au boîtier BB par vissage. Par ailleurs, cette douille DL constitue la partie arrière de la lampe LE, laquelle comprend une partie avant destinée à délivrer des photons dans l'espace interne du bloc optique BO. De plus, la douille DL est destinée à être alimentée en courant par un faisceau électrique FE.

Dans ce qui précède et ce qui suit, les notions « d'avant » et « d'arrière » qualifient des positionnements relatifs de parties d'un élément du bloc optique BO par rapport à la glace qui permet la sortie des photons vers l'extérieur du véhicule. Par conséquent, la partie avant d'un élément est plus proche de cette glace que la partie arrière de ce même élément.

De même, dans ce qui précède et ce qui suit, les notions « d'inférieur » et « de supérieur » qualifient des positionnements relatifs de parties d'un élément du bloc optique BO par rapport au plancher du véhicule. Par conséquent, la partie inférieure d'un élément est plus proche de ce plancher que la partie supérieure de ce même élément.

Comme illustré, le boîtier BB comporte une paroi arrière PR qui est munie d'un trou TT propre à permettre le passage de la partie avant (délivrant les photons) de la lampe LE. Par ailleurs, cette paroi arrière PR comprend une face arrière FR sur laquelle est définie une protubérance PP entourant le trou TT (de la douille DL) en définissant pour la douille DL de la lampe LE un muret de protection contre de l'eau (de pluie, de lavage ou de projection). Cette définition de la protubérance PP résulte préférentiellement du moulage du boîtier BB dans un matériau plastique (ou synthétique). Mais la protubérance PP pourrait éventuellement être rapportée fixement (par exemple par soudage ou collage) sur la face arrière FR de la paroi arrière PR du boîtier BB.

On comprendra que la partie avant de la lampe LE est introduite dans le trou TT, via la face arrière FR de la paroi arrière PR, jusqu'à ce qu'elle soit logée dans l'espace interne du bloc optique BO et que la douille DL soit couplée fixement au boîtier BB, par exemple par une rotation d'environ un quart de tour. On notera que l'on prévoit préférentiellement au moins un joint d'étanchéité autour du trou TT, du côté de la face arrière FR, pour éviter l'entrée d'eau dans le boîtier BB.

Selon l'invention, et comme illustré sur les figures 1 à 4, la protubérance PP comprend, dans une partie inférieure PI, au moins une ouverture OE qui est propre à permettre une évacuation automatique de l'eau présente sur une face interne FI (suivant la flèche F0 des figures 2 à 4).

La face interne FI de la protubérance PP est celle qui est orientée vers le trou TT.

Du fait de la présence d'au moins une ouverture OE dans la partie inférieure PI de la protubérance PP, l'eau ne peut plus stagner sur la face interne FI de cette dernière (PP) et donc ne risque plus de provoquer des odeurs désagréables et/ou d'entrer dans le boîtier BB.

On notera que dans l'exemple non limitatif illustré sur les figures 1 à 4, la partie inférieure PI de la protubérance PP ne comprend qu'une seule ouverture OE. Mais dans une variante de réalisation elle pourrait comporter plusieurs (au moins deux) ouvertures OE.

Afin de faciliter l'évacuation de l'eau, la protubérance PP peut, comme illustré non limitativement sur les figures 1 à 4, être une paroi sensiblement perpendiculaire à la face arrière FR et comportant des première SP1 et seconde SP2 sous-parties qui se prolongent. La première sous-partie SP1 entoure le trou TT sur un secteur angulaire qui est strictement inférieur à 360° afin de définir l'ouverture OE. La seconde sous-partie SP2 est conformée de manière à guider l'eau (suivant la flèche F0) jusque dans une zone d'évacuation ZE qui est située sous la partie inférieure PI.

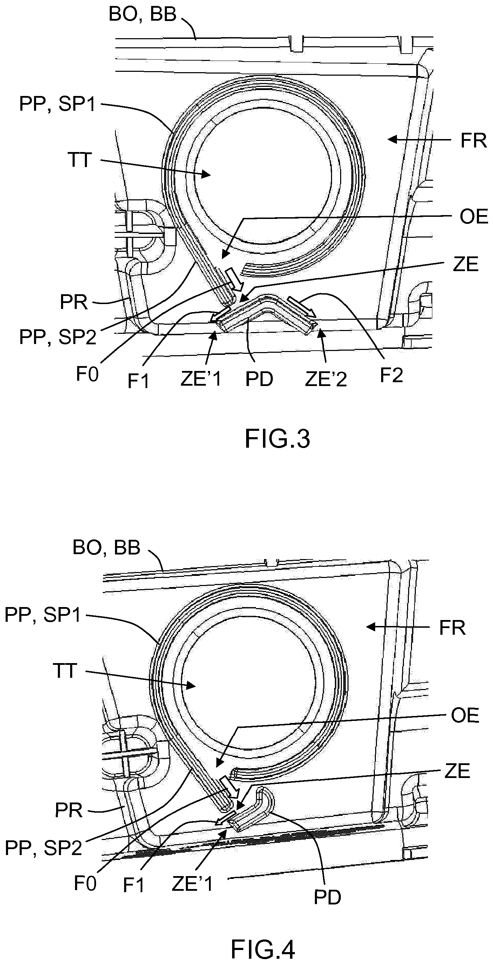

Comme illustré non limitativement sur les figures 1 à 4, cette seconde sous-partie SP2 peut être au moins en partie rectiligne. On notera que dans l'exemple des figures 1 et 2 la seconde sous-partie SP2 commence par une partie rectiligne puis se termine par une extrémité inférieure curviligne. En revanche, dans les exemples des figures 3 et 4 la seconde sous-partie SP2 est entièrement rectiligne. Dans une variante de réalisation non illustrée, la seconde sous-partie SP2 pourrait être entièrement curviligne. Dans une autre variante de réalisation non illustrée, la seconde sous-partie SP2 pourrait comporter plusieurs courbures, par exemple pour éviter ou contourner un élément du bloc optique BO ou de la face arrière FR de la partie arrière PR du boîtier BB.

On notera également, comme illustré non limitativement dans l'exemple des figures 1 et 2, que la seconde sous-partie SP2 peut s'étendre au moins un peu sous la première sous-partie SP1. Cela permet de décaler la zone d'évacuation ZE par rapport à l'ouverture OE.

On notera également, comme illustré non limitativement dans les exemples des figures 3 et 4, que la face arrière FR de la partie arrière PR du boîtier BB peut comprendre, dans la zone d'évacuation ZE, une paroi déflectrice PD qui est propre à transférer l'eau jusque dans au moins une autre zone d'évacuation ZE'j. Cette option est destinée à éviter que l'eau évacuée tombe sur un élément situé sensiblement directement en dessous de la zone d'évacuation ZE.

Cette paroi déflectrice PD peut présenter différentes formes dès lors qu'elles permettent de dévier (ou transférer) l'eau évacuée.

Ainsi, dans l'exemple illustré non limitativement sur la figure 3, la paroi déflectrice PD présente une forme générale d'accent circonflexe (ou de V retourné) de manière à transférer l'eau jusque dans deux autres zones d'évacuation ZE'1 et ZE'2 (j = 1 ou 2). La partie gauche de l'accent circonflexe PD permet d'évacuer l'eau vers la gauche (selon la flèche F1), tandis que la partie droite de l'accent circonflexe PD permet d'évacuer l'eau vers la droite (selon la flèche F2). Cela permet de répartir l'écoulement et le débit de l'eau vers la gauche et la droite de la zone d'évacuation ZE.

Dans l'exemple illustré non limitativement sur la figure 4, la paroi déflectrice PD présente une forme générale de virgule inclinée. La partie inférieure (sensiblement rectiligne) de la virgule inclinée PD permet d'évacuer l'eau selon la flèche F1 (ici vers la gauche de la zone d'évacuation ZE à titre d'exemple), tandis que la partie supérieure curviligne de la virgule inclinée PD permet d'empêcher que l'eau en rebondissant sur la partie inférieure passe derrière la paroi déflectrice PD et retombe sur un élément que cette dernière (PD) est destinée à protéger.

On notera que la paroi déflectrice PD peut être également utilisée pour modifier notablement la direction F0 d'évacuation de l'eau.

On notera également que la paroi déflectrice PD résulte préférentiellement du moulage du boîtier BB dans un matériau plastique (ou synthétique). Mais la paroi déflectrice PD pourrait éventuellement être rapportée fixement (par exemple par soudage ou collage) sur la face arrière FR de la paroi arrière PR du boîtier BB.

L'invention permet donc non seulement d'éviter que de l'eau stagne dans la zone où est installée la douille de la lampe, mais également de contrôler précisément l'écoulement (et éventuellement le débit) de l'eau afin qu'il(s) ne soi(en)t pas aléatoire(s) du fait d'une définition appropriée de la protubérance (et de l'éventuelle paroi déflectrice) en phase d'étude.

## Revendications

1. Bloc optique (BO) destiné à équiper un véhicule et comprenant un boîtier (BB) comportant une paroi arrière (PR) munie d'un trou (TT), propre à permettre le passage d'une partie avant d'une lampe (LE), et, sur une face arrière (FR), d'une protubérance (PP) entourant ledit trou (TT) en définissant pour une douille (DL) de ladite lampe (LE) un muret de protection contre de l'eau, dans lequel ladite protubérance (PP) comprend, dans une partie inférieure (PI), au moins une ouverture (OE) propre à permettre une évacuation automatique d'eau présente sur une face interne (FI), **caractérisé en ce que** ladite protubérance (PP) est une paroi sensiblement perpendiculaire à ladite face arrière (FR) et comportant une première sous-partie (SP1) entourant ledit trou (TT) sur un secteur angulaire strictement inférieur à 360° afin de définir ladite ouverture (OE), et prolongée par une seconde sous-partie (SP2) conformée de manière à guider l'eau jusque dans une zone d'évacuation (ZE) située sous ladite partie inférieure (PI).

2. Bloc optique selon la revendication 1, **caractérisé en ce que** ladite seconde sous-partie (SP2) est au moins en partie rectiligne.

3. Bloc optique selon l'une des revendications 1 ou 2, **caractérisé en ce que** ladite seconde sous-partie (SP2) comprend une extrémité inférieure curviligne.

4. Bloc optique selon l'une des revendications 1 à 3, **caractérisé en ce que** ladite face arrière (FR) de la partie arrière (PR) du boîtier (BB) comprend, dans ladite zone d'évacuation (ZE), une paroi déflectrice (PD) propre à transférer l'eau jusque dans au moins une autre zone d'évacuation (ZE'j).

5. Bloc optique selon la revendication 4, **caractérisé en ce que** ladite paroi déflectrice (PD) présente une forme générale d'accent circonflexe de manière à transférer l'eau jusque dans deux autres zones d'évacuation (ZE'j).

6. Bloc optique selon la revendication 4, **caractérisé en ce que** ladite paroi déflectrice (PD) présente une forme générale de virgule inclinée.

7. Véhicule, **caractérisé en ce qu'**il comprend au moins un bloc optique (BO) selon l'une des revendications précédentes.

8. Véhicule selon la revendication 7, **caractérisé en ce qu'**il est de type automobile.

## Patentansprüche

1. Scheinwerfereinsatz (BO), der dazu bestimmt ist, ein Fahrzeug auszustatten, und der ein Gehäuse (BB) umfasst, das eine Rückwand (PR) enthält, die mit einem Loch (TT) versehen ist, das geeignet ist, den Durchgang eines vorderen Abschnitts einer Lampe (LE) zu ermöglichen, und, auf einer Rückseite (FR), mit einem Vorsprung (PP), der das Loch (TT) umgibt, indem er für eine Fassung (DL) der Lampe (LE) eine Schutzumwandung gegen Wasser definiert, wobei der Vorsprung (PP), in einem unteren Teil (PI), mindestens eine Öffnung (OE) umfasst, die geeignet ist, einen automatischen Abfluss von Wasser zu ermöglichen, das auf einer Innenseite (FI) vorhanden ist, **dadurch gekennzeichnet, dass** der Vorsprung (PP) eine zu der Rückseite (FR) im Wesentlichen senkrechte Wand ist und einen ersten Unterabschnitt (SP1) enthält, der das Loch (TT) über einen Winkelsektor von strikt unter 360° umgibt, um die Öffnung (OE) zu definieren, und von einem zweiten Unterabschnitt (SP2) verlängert wird, der so ausgeführt ist, dass er das Wasser bis in einen Abflussbereich (ZE) führt, der sich unter dem unteren Abschnitt (PI) befindet.

2. Scheinwerfereinsatz nach Anspruch 1, **dadurch gekennzeichnet, dass** der zweite Unterabschnitt (SP2) mindestens teilweise geradlinig ist.

3. Scheinwerfereinsatz nach einem der Ansprüche 1 oder 2, **dadurch gekennzeichnet, dass** der zweite Unterabschnitt (SP2) ein gekrümmtes unteres Ende umfasst.

4. Scheinwerfereinsatz nach einem der Ansprüche 1 bis 3, **dadurch gekennzeichnet, dass** die Rückseite (FR) der Rückwand (PR) des Gehäuses (BB) in dem Abflussbereich (ZE) eine Ablenkwand (PD) umfasst, die geeignet ist, das Wasser bis mindestens in einen anderen Abflussbereich (ZE'j) zu leiten.

5. Scheinwerfereinsatz nach Anspruch 4, **dadurch gekennzeichnet, dass** die Ablenkwand (PD) eine allgemeine Form eines Zirkumflexzeichens aufweist, um das Wasser bis in zwei andere Abflussbereiche (ZE'j) zu leiten.

6. Scheinwerfereinsatz nach Anspruch 4, **dadurch gekennzeichnet, dass** die Ablenkwand (PD) die allgemeine Form eines schrägen Kommas aufweist.

7. Fahrzeug, **dadurch gekennzeichnet, dass** es mindestens einen Scheinwerfereinsatz (BO) nach einem der vorstehenden Ansprüche umfasst.

8. Fahrzeug nach Anspruch 7, **dadurch gekennzeichnet, dass** es ein Kraftfahrzeug ist.

## Claims

1. Optical unit (BO) for a vehicle and comprising a housing (BB) comprising a rear wall (PR) provided with a hole (TT), able to allow for the passage of a front portion of a lamp (LE), and, on a rear face (FR), of a protrusion (PP) surrounding said hole (TT) by defining for a socket (DL) of said lamp (LE) a protective wall against water, wherein said protrusion (PP) comprises, in a lower portion (PI), at least one opening (OE) able to allow for an automatic discharge of water present on an internal face (FI), **characterised in that** said protrusion (PP) is a wall substantially perpendicular to said rear face (FR) and comprising a first sub-section (SP1) surrounding said hole (TT) on an angular sector strictly less than 360° in order to define said opening (OE), and extended by a second sub-section (SP2) shaped in such a way as to guide the water to a discharge zone (ZE) located under said lower portion (PI).

2. Optical unit according to claim 1, **characterised in that** said second sub-section (SP2) is at least partially straight.

3. Optical unit according to one of claims 1 or 2, **characterised in that** said second sub-section (SP2) comprises a curved lower end.

4. Optical unit according to one of claims 1 to 3, **characterised in that** said rear face (FR) of the rear portion (PR) of the housing (BB) comprises, in said discharge zone (ZE), a deflecting wall (PD) able to transfer water to at least one other discharge zone (ZE'j).

5. Optical unit according to claim 4, **characterised in that** said deflecting wall (PD) has the general shape of a circumflex accent in such a way as to transfer the water to two other discharge zones (ZE'j).

6. Optical unit according to claim 4, **characterised in that** said deflecting wall (PD) has the general shape of an inclined comma.

7. Vehicle, **characterised in that** it comprises at least one optical unit (BO) according to one of the preceding claims.

8. Vehicle according to claim 7, **characterised in that** it is of the automobile type.
